# EUROPEAN PATENT APPLICATION

(11) **EP 0 755 835 A1**
(43) Date of publication of application: **29.01.1997**
(21) Application number: 96830417.0
(22) Date of filing: 26.07.1996
(51) Int. Cl.: B60S 3/04, A47L 1/05

(54) **Window washing device,in particular of a motor vehicle**

(30) Priority: 28.07.1995 IT RM950531
(71) Applicant: De Noia, Pietro, 00133 Roma (IT)
(72) Inventor: De Noia, Pietro, 00133 Roma (IT)
(74) Representative: Iannone, Carlo Luigi

(57) **Abstract**

The invention relates to a device (1) for cleaning a glass, particularly of vehicles, comprising a handle element (2) connected at one end to hot water (3) and/or vapour generation means, and at the other end to cleaning and hot water and/or vapour distribution means (6), means for scraping the surface to be cleaned and means (7) to control the delivery of said hot water and/or vapour.

## Description

The present invention concerns a device for cleaning glasses, particularly for vehicles, trains, aeroplanes, but also for industrial buildings, cleaning companies, ecc.

More particularly, the invention relates to a device of the above kind which allows to carefully and quickly clean the glass of vehicles in a very convenient way and with a reduced physical effort.

At present, as it is well known, the cleaning of the glasses, particularly of the front and rear windscreen is carried by hand, employing a hand tool provided at its end with a sponge on a first side and a scraper on the other side.

Usually, in order to try to eliminate midges or another insects which built up on the glass it is necessary to carry out a strong scraping operation that cannot be carried out by this tool and that not always allows to reach the desired result.

Furthermore, the system presently used does not allow to the worker to operate in the best conditions, so that besides the fact that it is not possible to obtain the best cleaning of the surface, he get dirty being it necessary to lean out on the vehicle.

Moreover, the solution presently used does not allow to operate in enough quick times so that, particularly in large petrol stations or in case of long lines for the refuelling, not always it is possible for the worker to give to the client this kind of service which in many cases is indispensable.

In view of the above, the Applicant has thought to realise a device like the one suggested according to the present invention able to solve the above mentioned drawbacks.

In fact, the solution proposed according to the present invention allows to automatically carry out the cleaning of the surface of a glass, particularly of vehicles, without the need of making complicated and heavy operations.

Further, the solution proposed according to the present invention allows to carry out the cleaning in a very quick and neat way.

It is therefore specific object of the present invention a device for cleaning a glass, particularly of vehicles, comprising a handle element connected at one end to hot water and/or vapour generation means, and at the other end to cleaning and hot water and/or vapour distribution means, means for scraping the surface to be cleaned and means to control the delivery of said hot water and/or vapour.

Preferably, according to the invention, hot water delivery means are provided, said means being comprised of a container provided with electric, gas, kerosene, gas oil heater means fixedly or removably coupled with the device according to the invention.

Further, according to the invention, vapour generation means can be provided, said means being fixedly or removably coupled with the device according to the invention.

Still according to the invention, said cleaning and distribution means comprises a plurality of delivery holes connected with said hot water and/or vapour generation means by a feeding tube passing within said handle element.

Always according to the invention, said cleaning and distribution means provides cleaning fixed peripheral brushes.

According to a preferred embodiment of the device according to the invention, said cleaning and distribution means comprises at least a rotating brush, on said handle element control means for said rotating brush being provided.

Said at least one rotating brush can be comprised according to the invention of bristle bunches or of soft elements.

Furthermore, said at least one rotating brush can be replaceable.

The operation of said at least one rotating brush can be obtained by an electric motor directly provided within the cleaning and distribution means, with a direct transmission of the motion to said at least rotating brush, or within said handle element, the transmission of the motion being obtained by mechanical transmissions.

Further, according to the invention, said at least on rotating brush can be operated acting on a rotor coupled to said at least one brush, operated by compressed air or by a pump feeding water through said handling element, within said feeding element a back flow tube for the water toward the tank being provided, on said impeller water delivery holes being provided, in said tank water level control means being provided.

Still according to the invention, said means for scraping the surface to be cleaned can be provided movable between two positions, namely an operative position and a rest position, the motion between said two positions being obtained for example by means of an electromagnetic, mechanical, ecc. actuator, directly controlled by said handle element.

Furthermore, according to the invention, said scraping means can be provided fixed on said cleaning and delivery means, to use them being necessary to turn over the device according to the invention.

The present invention will be now described for illustrative but not limitative purposes according to its preferred embodiments with particular reference to the figures of the enclosed drawings, wherein:
figure 1 is a perspective view of a first embodiment of the device according to the invention;
figure 2 is a first side view of the head of the device of figure 1;
figure 3 is a second side view of the head of the device of figure 1;
figure 4 is a front view of the head of the device of figure 1;
figure 5 is rear view of the head of the device of figure 1;
figure 6 is a top view of the device of figure 1;
figure 7 is a bottom view of the head of the device of figure 1;
figure 8 is a cross-section view of the head of the device of figure 1;
figure 9 is a perspective view of a according embodiment of the device according to the invention;
figure 10 is a first side view of the head of the device of figure 9;
figure 11 is a second side view of the head of the device of figure 9;
figure 12 is a front view of the head of the device of figure 9;
figure 13 is rear view of the head of the device of figure 9;
figure 14 is a top view of the device of figure 9;
figure 15 is a bottom view of the head of the device of figure 9;
figure 16 is a cross-section view of the head of the device of figure 9;
figure 17 is a perspective view of a third embodiment of the device according to the invention;
figure 18 is a first side view of the head of the device of figure 17;
figure 19 is a second side view of the head of the device of figure 17;
figure 20 is a front view of the head of the device of figure 17;
figure 21 is rear view of the head of the device of figure 17;
figure 22 is a broken away top view of the device of figure 17;
figure 23 is a bottom view of the head of the device of figure 17;
figure 24 is a cross-section view of the head of the device of figure 17;
figure 25 is a first perspective view of a fourth embodiment of the device according to the invention;
figure 26 is a second perspective view of a fourth embodiment of the device according to the invention;
figure 27 is a side view of the head of the device of figure 25;
figure 28 is a cross-section view of the head of the device of figure 25;
figure 29 is a section view taken along line B-B of figure 27;
figure 30 is a bottom view of the head of the device of figure 25;
figure 31 is a first perspective view of a fifth embodiment of the device according to the invention;
figure 32 is a second perspective view of a fifth embodiment of the device according to the invention;
figure 33 is a side view of the head of the device of figure 31;
figure 34 is a section view taken along line A-A of figure 31;
figure 35 is a bottom view of the head of the device of figure 31;
figure 36 is a perspective view of a sixth embodiment of the device according to the invention;
figure 37 is a first side view of the head of the device of figure 36;
figure 38 is a second side view of the head of the device of figure 36;
figure 39 is a front view of the head of the device of figure 36;
figure 40 is rear view of the head of the device of figure 36;
figure 41 is a top view of the device of figure 36;
figure 42 is a bottom view of the head of the device of figure 36; and
figure 43 is a cross-section view of the head of the device of figure 36.

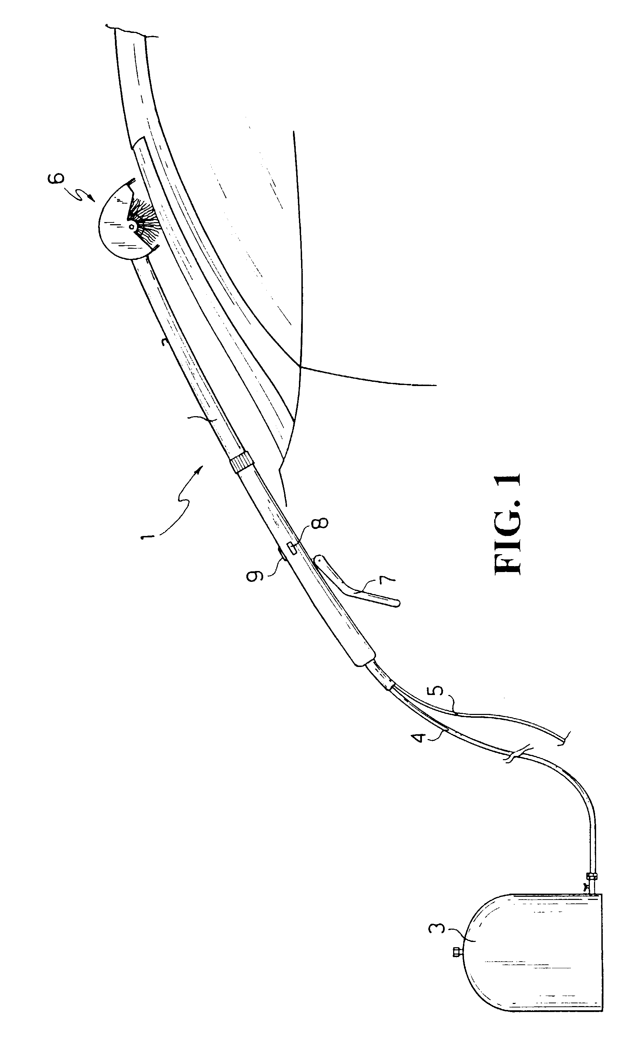

Referring first to figures 1 - 8, a first embodiment of the device according to the invention is shown.

In figure 1, it can be seen the device 1 comprising a handle 2 connected at the back to a water tank, provided with a water heating system, not shown, by the tube 4, and to the electric supply by the wire 5.

As already mentioned, the heating of the water within the tank 3 can be obtained also by different systems, for example an independent kerosene, gas oil, gas boiler, ecc.

On the opposite end of the handle 2 the head 6 of the device according to the invention is provided, said head will be described in the following.

A lever 7 to control the delivery of water as well as a control button for the brushes of the head and a button for the insertion of the scraper are provided on the handle 2.

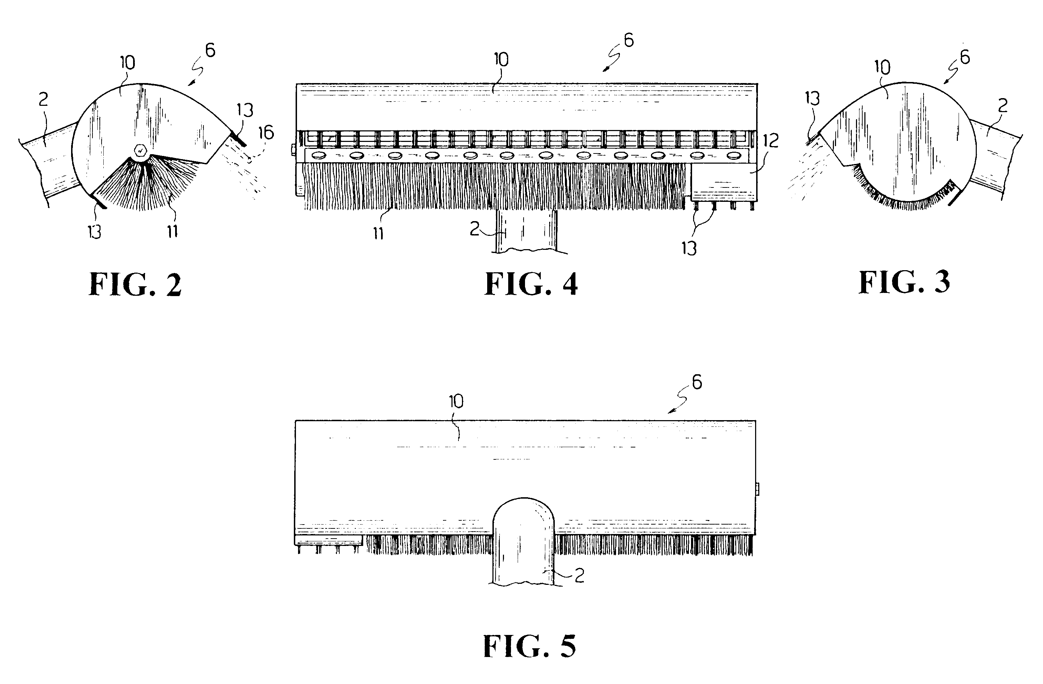

Coming now to observe figures 2 - 8, the features of the head 6 of this embodiment of the device 1 according to the invention can be observed.

The head 6 comprises a shaped housing 10, within which a rotating brush 11 controlled by the electric motor 12 is provided, said motor being coaxial with respect to the brush 11 and connected with said electric supply wire 5.

Fixed brushes 13 are provided on the perimeter of said housing.

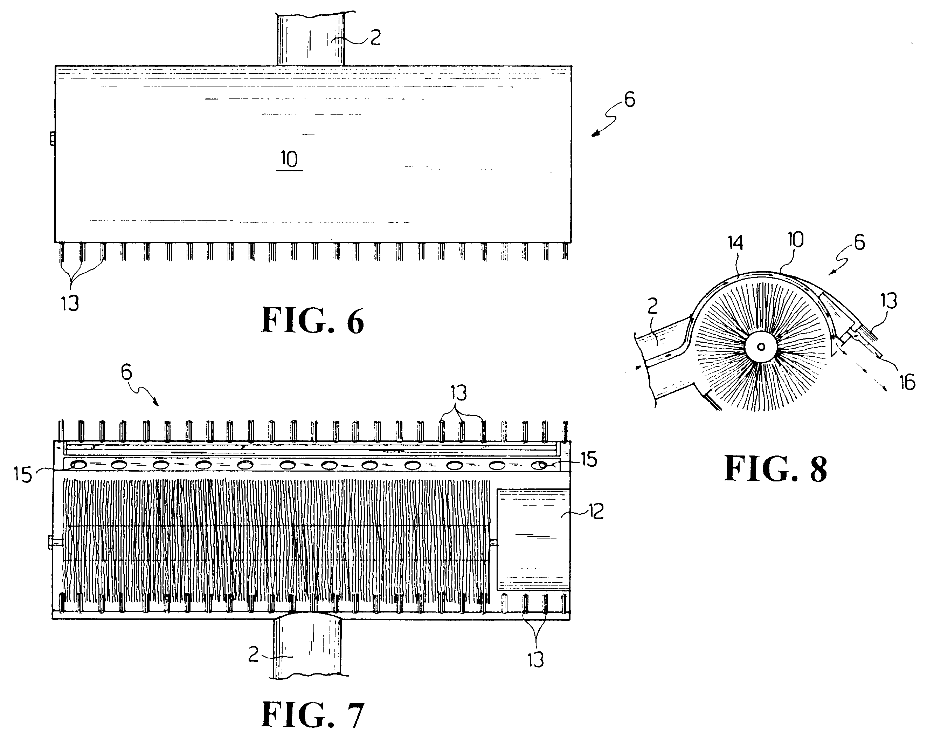

Within said housing 10, in a higher position with respect to the brush, a hot water delivery duct 14 is provided (see particularly figure 8), ending with a plurality of delivery holes 15 to distribute water directly on the glass of the vehicle.

In a position in front of and above said housing the scraper 16 is provided, said scraper being movable between two positions (see figures 2 and 3, wherein the extended position is shown by dot and line), useful to remove the remaining water after the cleaning of the glass.

The displacement of the scraper between the two positions is controlled by the button 9 acting on suitable means, not shown, for example an electromagnet.

The combined action of the hot water and of the rotating brush 11 allows to remove any kind of dirtiness built up on the glass without the need of carrying out particularly difficult operations.

The fixed brushes 13 allow to make a further cleaning operation scraping the most obstinate dirtiness.

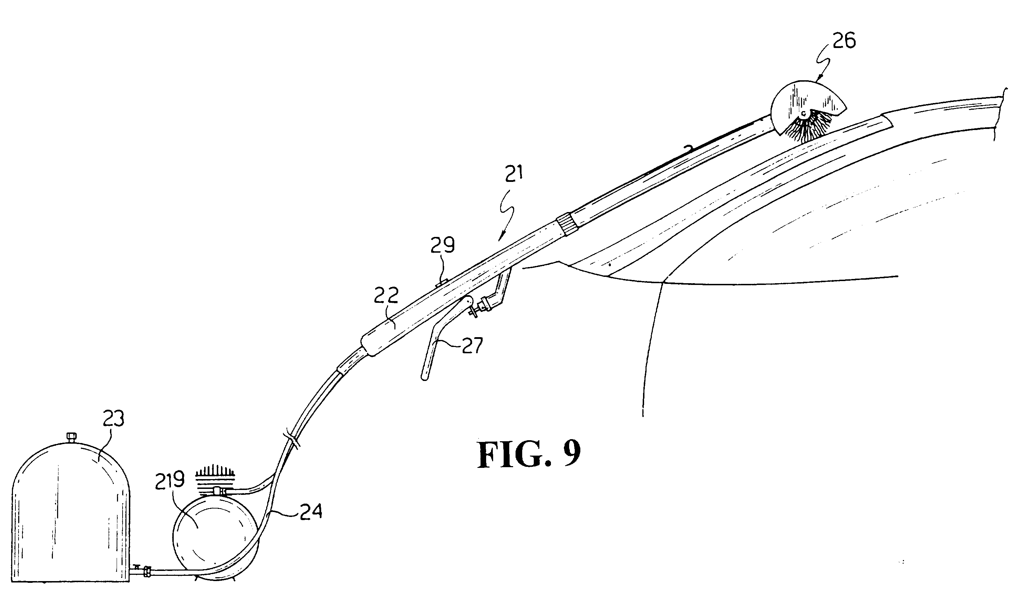

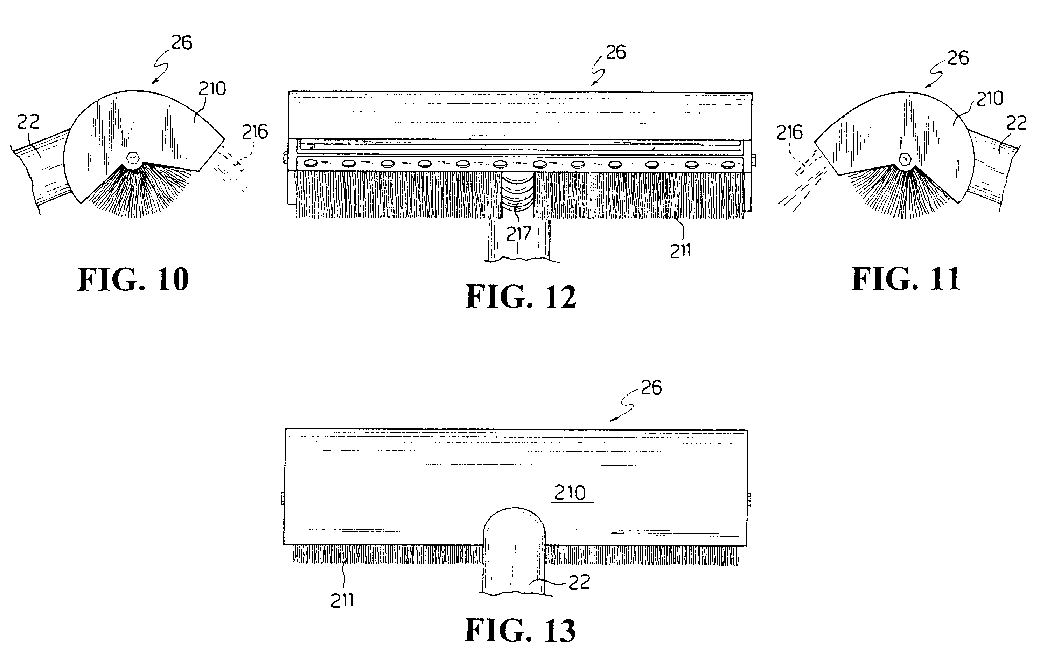

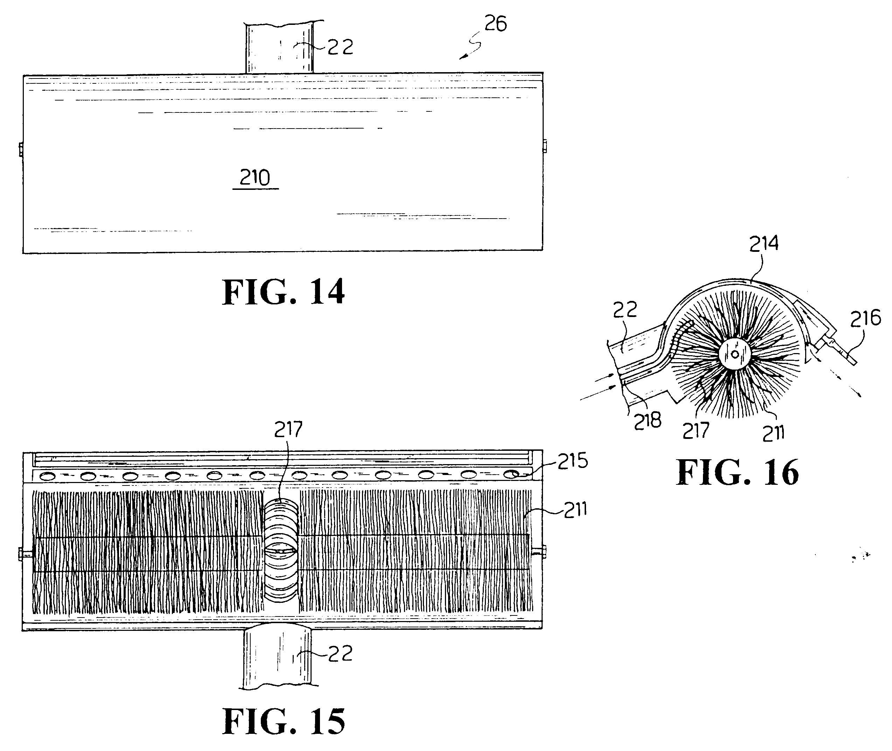

Coming now to make reference to figures 9 - 16, a second embodiment of the device according to the invention is shown, wherein the part corresponding to those of the first embodiments are indicated by the same reference numbers preceded by the number 2.

In this solution of the device 21 according to the invention, the brush 211 is operated by a turbine 217 fed by the air duct 218 connected to the compressor 219.

The remaining parts of the device 21 are similar to the device of the preceding embodiment.

It must be underlined once more that the turbine 217 can be operated by air or vapour.

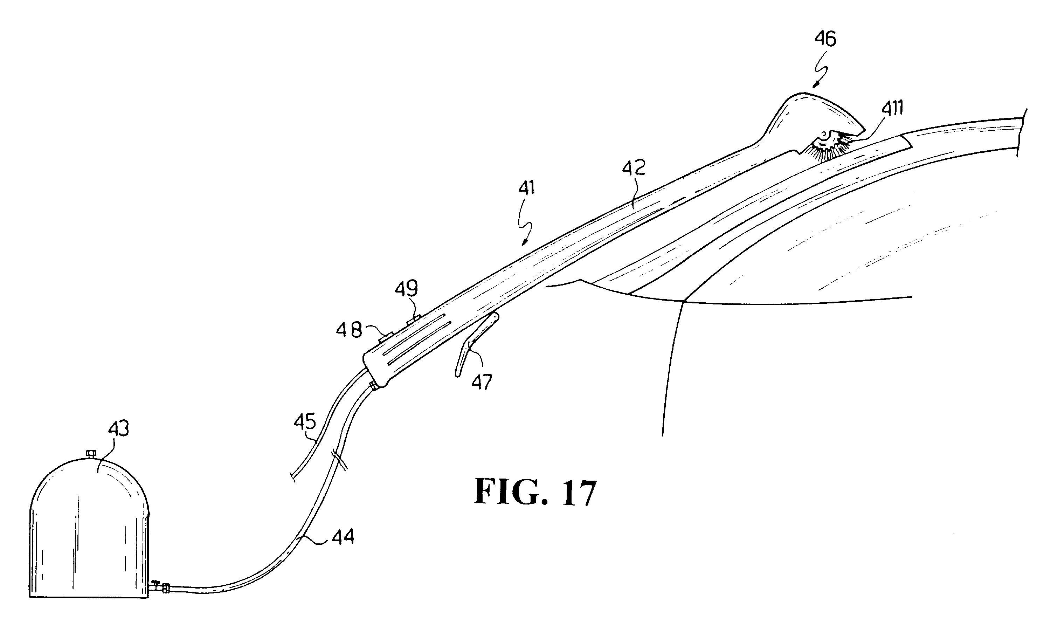

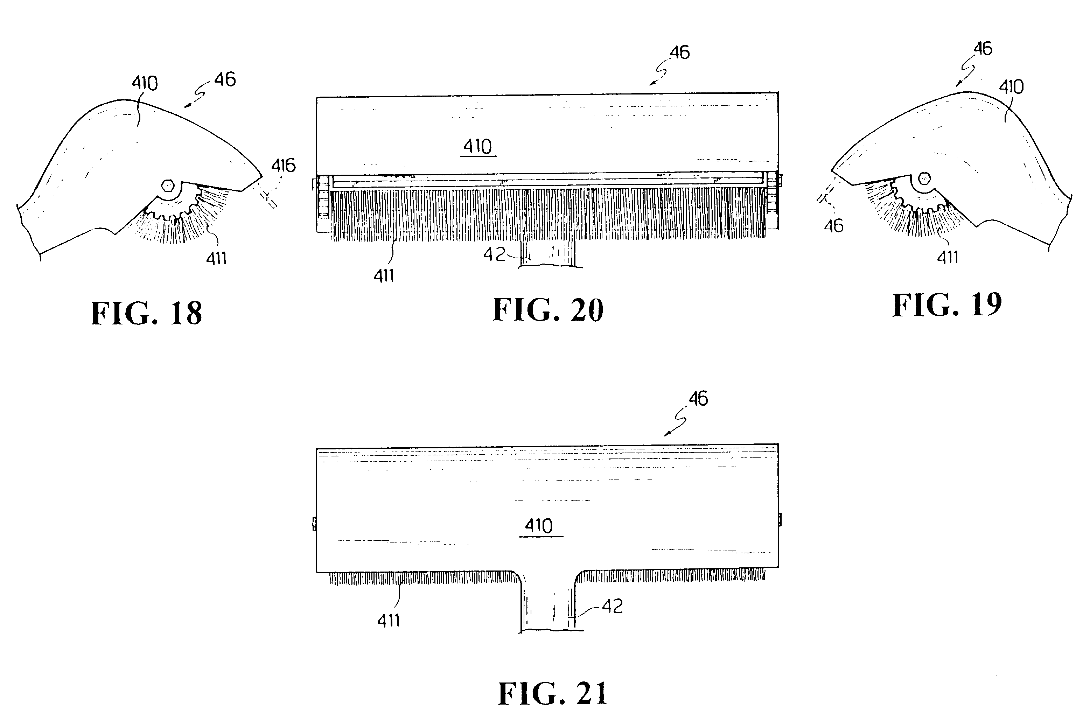

Also in the case of the embodiment of figures 17 - 24, the parts corresponding to those of the first embodiment are indicated by the same reference numbers, in this case preceded by the number 4.

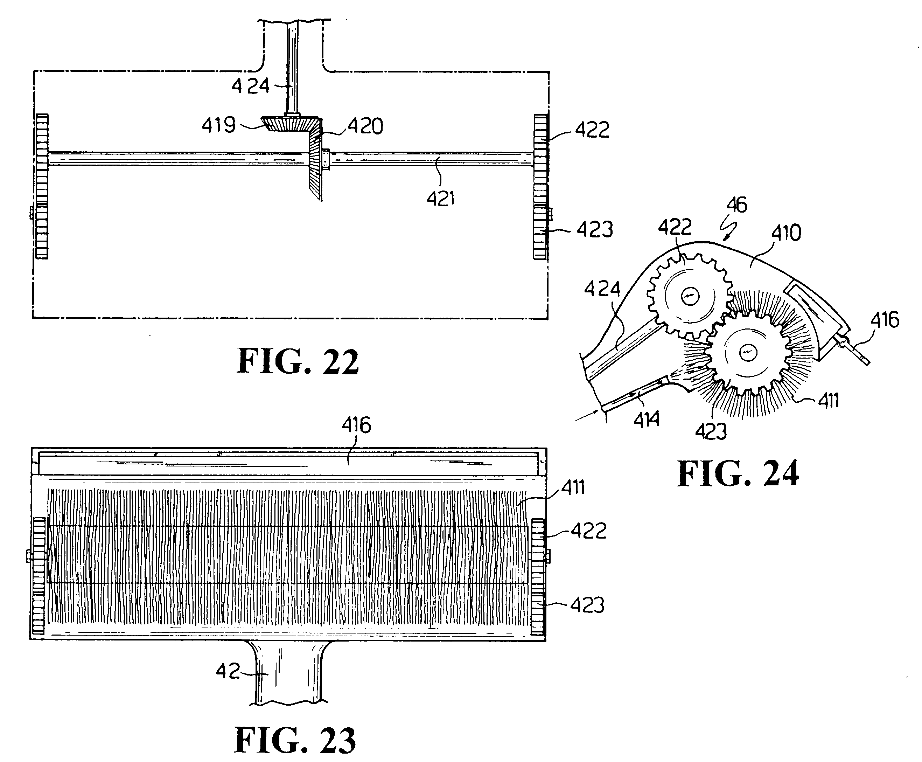

In this solution, the rotating brush 411 is operated by an electric motor (not visible) housed within the handle 42 and coupled to the brush by the bevel gears 419 and 429, visible in the figure 22.

Further, the spindle 421 of the rotating brush 411 is driven by the side gears 422 and 423.

The bevel gear 419 and the electric motor are coupled by the spindle 424.

In this case the feeding of the hot water by the duct 4141 directly occurs behind the rotating brush 411.

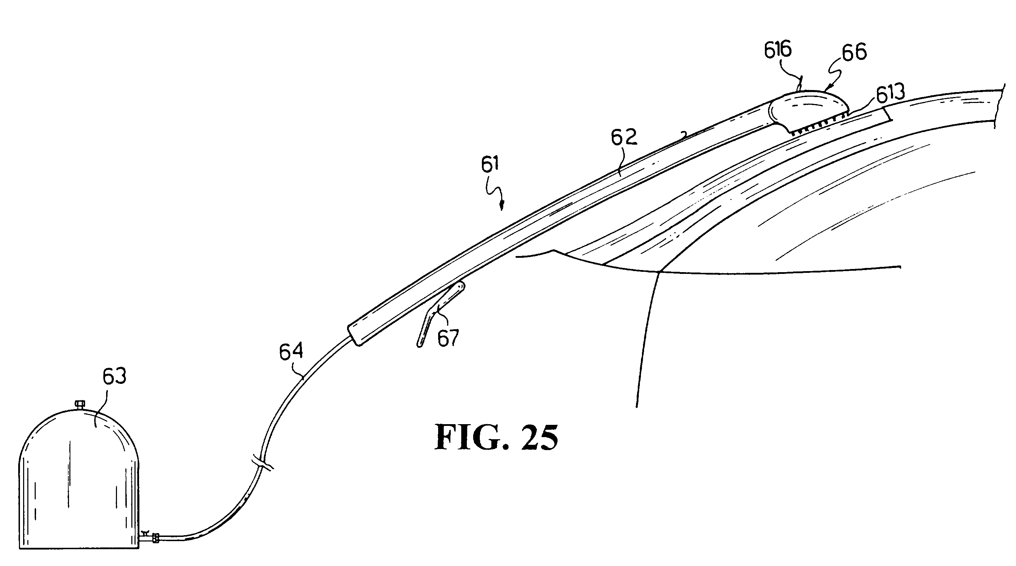

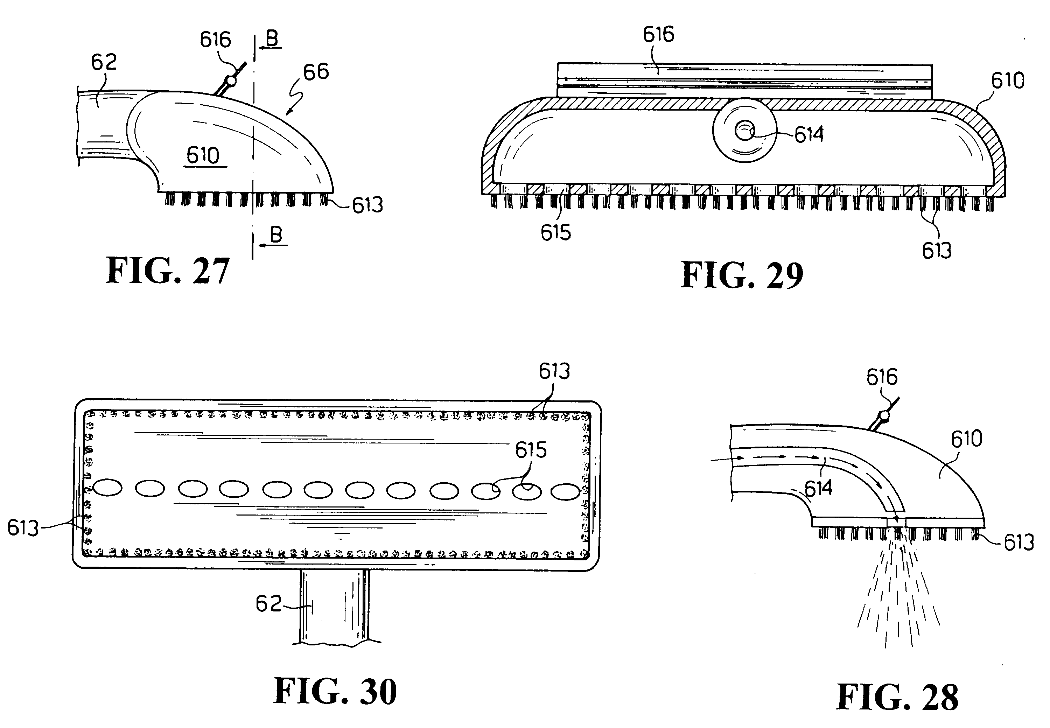

Coming now to consider figures 5 - 30, wherein the parts corresponding to those of the first embodiment are indicated by the same reference numbers preceded by number 6, a simplified embodiment of the device according to the invention is shown wherein the rotating brush is not provided.

Hot water comes out from a plurality of central holes 615 and the scraping action is due to the peripheral brushes 613.

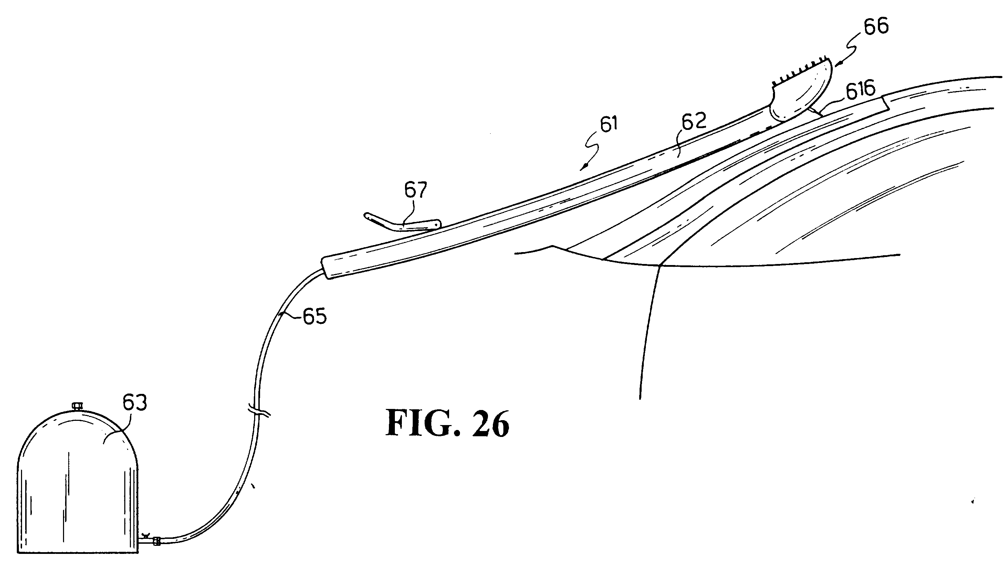

In this case the scraper 616 is provided on the rear part of the head 66, so that for its use it is necessary to turn over the device 61, as shown in figure 26.

Obviously, this solution can be employed in any of the various embodiments, as well as in the solution that is shown and described a movable scraper as described in the above could be provided.

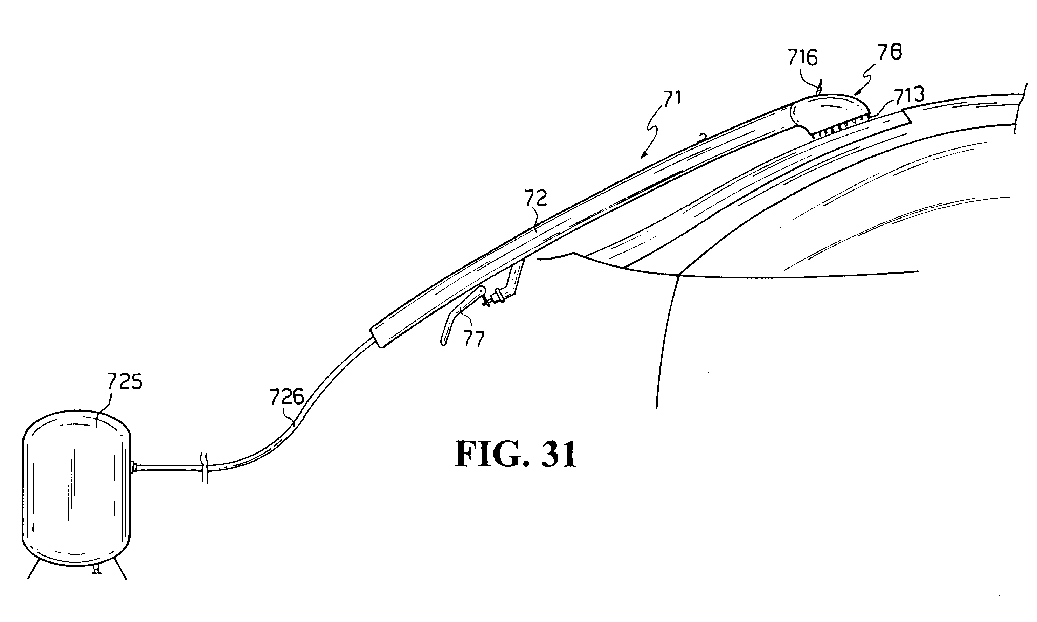

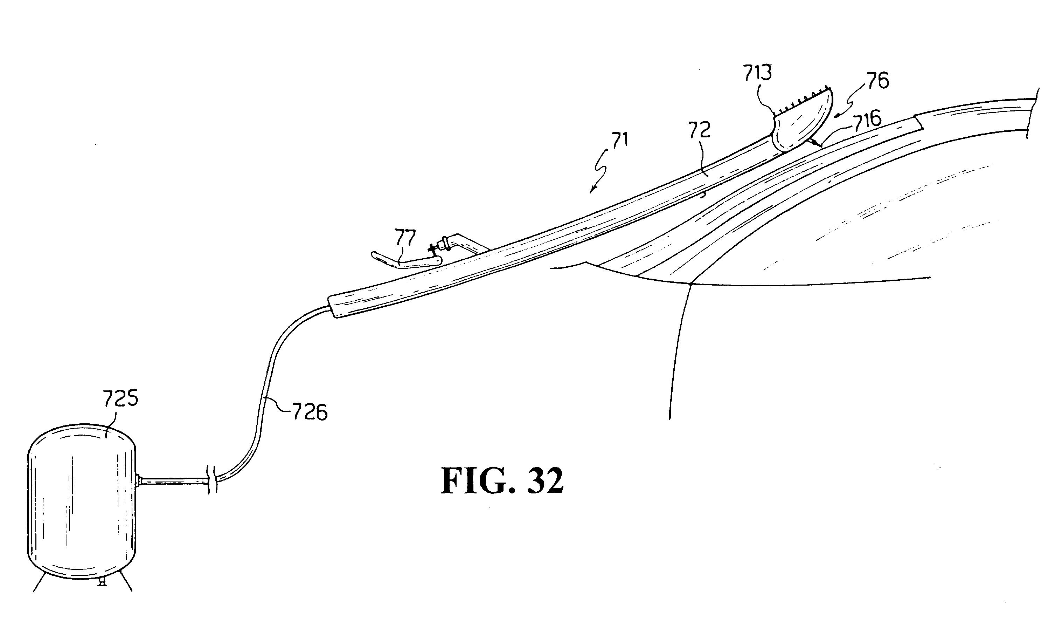

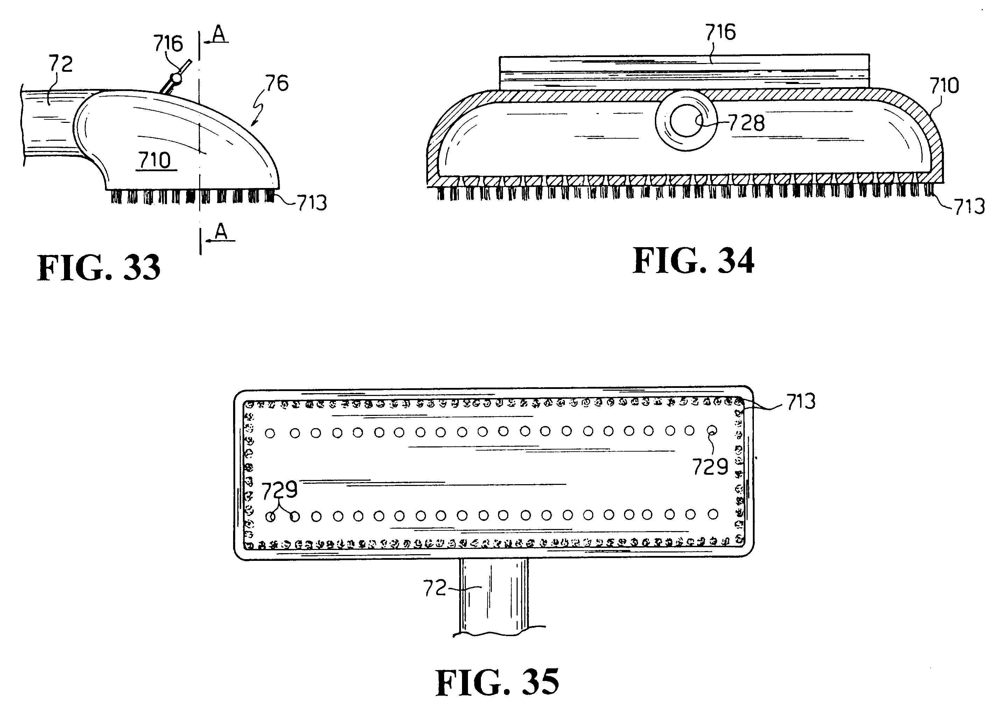

The solution shown in figures 31 - 35, and the parts corresponding with those of figures 1 - 8 are indicated by the same reference numbers preceded by the number 7, provides the use of vapour instead of hot air.

Therefore, it is provided a boiler connected by a tube 726 to the device 71 according to the invention, and the lever 77 controls the delivery of the vapour from the head 76.

On the head 76 a double row of holes 729 is provided, the vapour being fed through the central tube 728.

The scraping action is obtained by the peripheral brushes 713.

In the solution shown, the scraper 716 is of the same kind of the preceding solution, but it is well evident that it could be of the other kind.

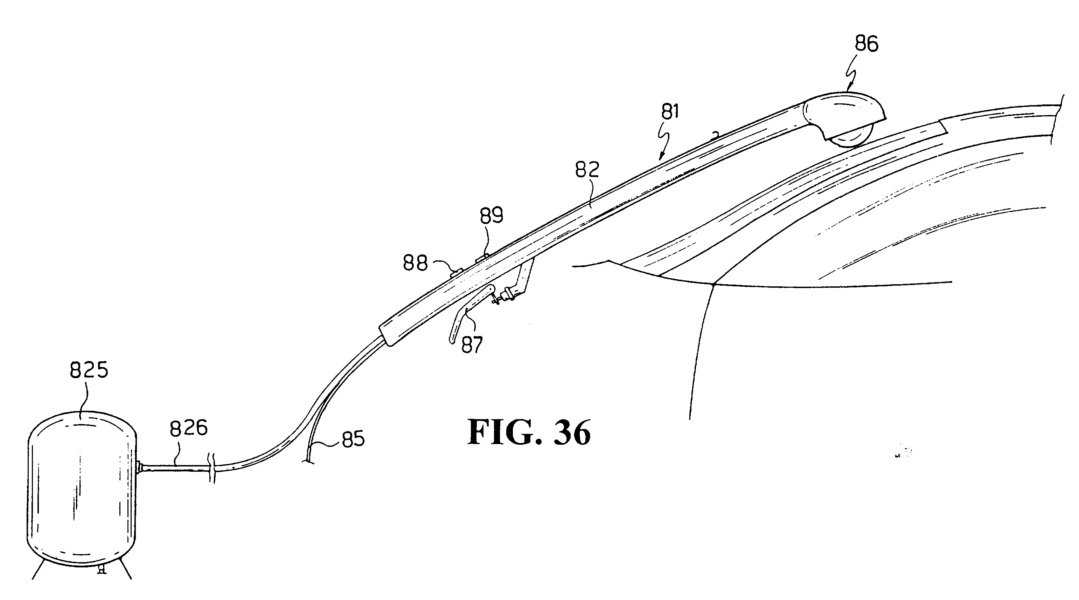

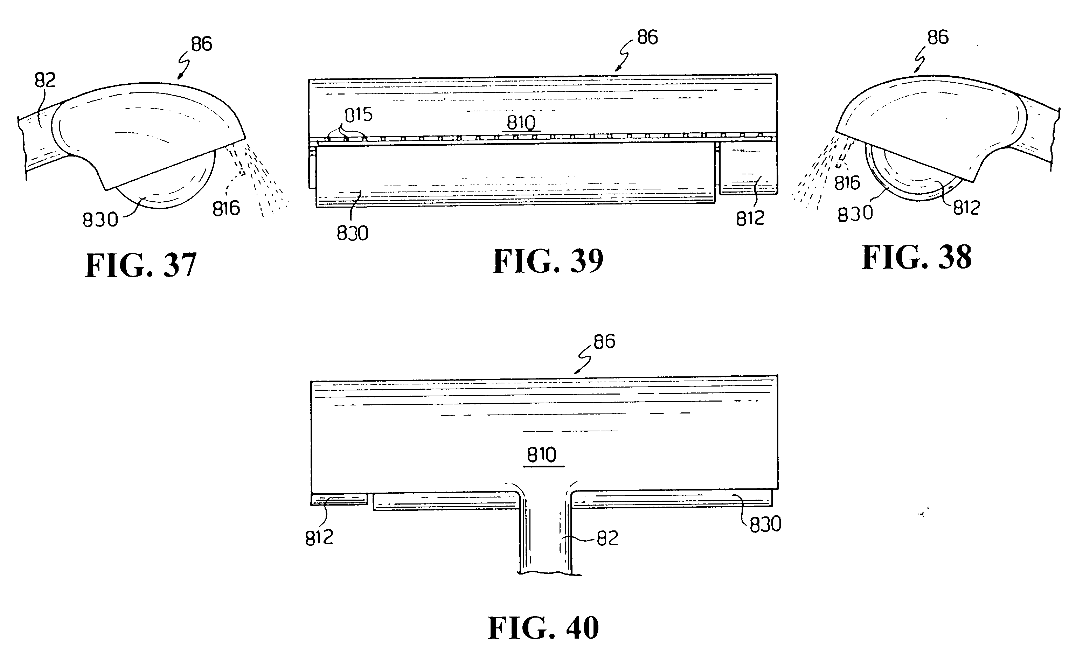

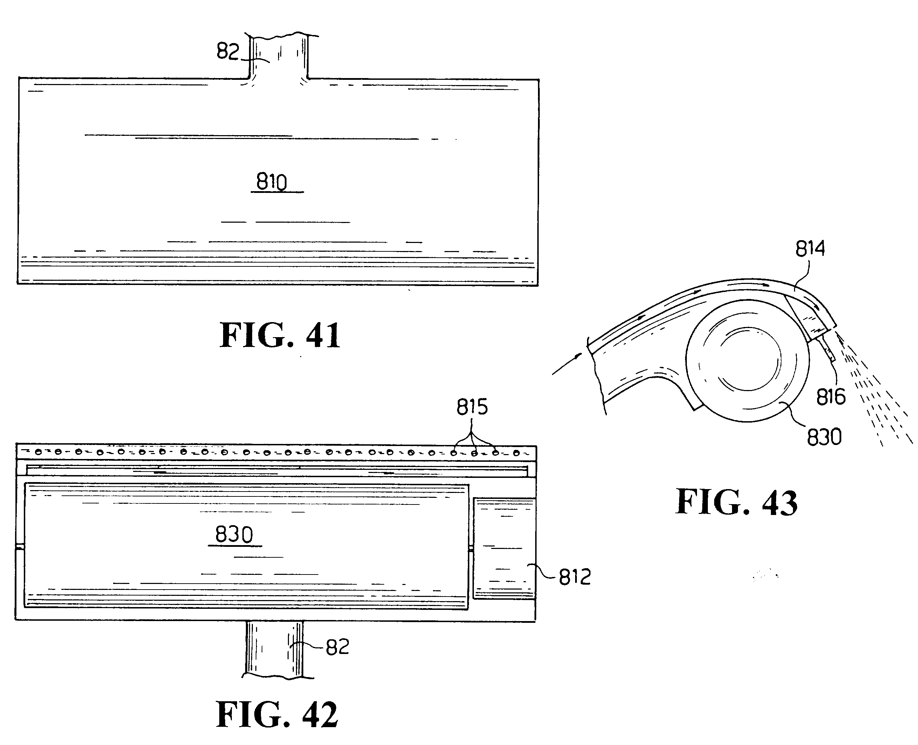

The solution shown in the figures 36 - 42 is an embodiment, the parts of which corresponding to those of the other embodiments are preceded by the umber 8, comprises the features of the first and fifth embodiments.

In fact, it provides the use of the vapour in combination with a rotating brush 830, that in this case is realised by softer material.

All the other features could obviously different, being it possible to adopt the solutions already described with reference to the other embodiments.

It is further important to point out that the peripheral brushes 13 could be all provided in the various solution shown.

Furthermore, the rotating brush 11, 211, 411 or 830 can be always replaceable.

Finally, it must be put into evidence that in the sixth embodiment, the motor 812 could be provided within the handle 82 of the device according to the invention.

The present invention has been described for illustrative but not limitative purposes according to its preferred embodiments, but is to be understood that modifications and/or changes can be introduced by those skilled in the art without departing from the relevant scope as defined in the enclosed claims.

## Claims

1. Device for cleaning a glass, particularly of vehicles, characterised in that it comprises a handle element connected at one end to hot water and/or vapour generation means, and at the other end to cleaning and hot water and/or vapour distribution means, means for scraping the surface to be cleaned and means to control the delivery of said hot water and/or vapour.

2. Device according to claim 1, characterised in that hot water delivery means are provided, said means being comprised of a container provided with electric, gas, kerosene, gas oil heater means.

3. Device according to claim 2, characterised in that said hot water delivery means are fixedly or removably coupled with the device.

4. Device according to claim 1, characterised in that vapour generation means are provided.

5. Device according to claim 4, characterised in that said vapour generation means are fixedly or removably coupled with the device.

6. Device according to one of the preceding claims, characterised in that said cleaning and distribution means comprises a plurality of delivery holes connected with said hot water and/or vapour generation means by a feeding tube passing within said handle element.

7. Device according to one of the preceding claims, characterised in that said cleaning and distribution means provides cleaning fixed peripheral brushes.

8. Device according to one of the preceding claims, characterised in that said cleaning and distribution means comprises at least a rotating brush, on said handle element control means for said rotating brush being provided.

9. Device according to claim 8, characterised in that said at least one rotating brush comprises of bristle bunches or of soft elements.

10. Device according to claim 8 or 9, characterised in that said at least one rotating brush can be replaceable.

11. Device according to claim 8, 9 or 10, characterised in that the operation of said at least one rotating brush is obtained by an electric motor directly provided within the cleaning and distribution means, with a direct transmission of the motion to said at least rotating.

12. Device according to claim 8, 9 or 10, characterised in that the operation of said at least one rotating brush is obtained by an electric motor directly provided within the handle element, the transmission of the motion being obtained by mechanical transmissions.

13. Device according to claim 8, 9 or 10, characterised in that said at least on rotating brush is operated acting on a rotor coupled to said at least one brush.

14. Device according to claim 13, characterised in that said impeller is operated by compressed air.

15. Device according to claim 13, characterised in that said impeller is operated by a pump feeding water through said handling element, within said feeding element a back flow tube for the water toward the tank being provided, on said impeller water delivery holes being provided, in said tank water level control means being provided.

16. Device according to one of the preceding claims, characterised in that said means for scraping the surface to be cleaned are provided movable between two positions, namely an operative position and a rest position, the motion between said two positions being obtained for example by means of an electromagnetic, mechanical, ecc. actuator, directly controlled by said handle element.

17. Device according to one of the preceding claims 1 - 15, characterised in that said scraping means are be provided fixed on said cleaning and delivery means, to use them being necessary to turn over the device according to the invention.
